# EUROPEAN PATENT APPLICATION

(11) **EP 2 339 803 A1**
(43) Date of publication of application: **29.06.2011**
(21) Application number: 09180749.5
(22) Date of filing: 24.12.2009
(51) Int. Cl.: H04L 25/49

(54) **Pulse Width Modulation Data Transmission**

(71) Applicant: NXP B.V., 5656 AG Eindhoven (NL)
(72) Inventor: DEN BESTEN, Gerrit, Redhill, Surrey RH1 1DL (GB)
(74) Representative: Ashton, Gareth Mark

(57) **Abstract**

Presented are methods for several methods for entering (starting) and exiting (stopping) PWM data transmission. Such methods enable a PWM data transmission system to make enter/exit a power saving state without causing data transmission errors or failure.

## Description

This invention relates to Pulse Width Modulation (PWM) data transmission, and more particularly to stopping and starting PWM data transmission.

Pulse Width Modulation (PWM) is a well known self-clocked signalling scheme for data transmission. Typically, for telecommunications, the widths of pulses correspond to specific data values which are encoded at a transmission end and decoding at a receiving end. Pulses of various lengths (the information itself) are normally sent at regular intervals (the carrier frequency of the modulation).

Despite its limited coding efficiency, the PWM signalling scheme is attractive as it allows for data transmission over a wide range of frequencies making bandwidth scalable to system needs. Also, it does not require the availability of a shared reference clock.

For power saving reasons, if there is no information to transfer, it may be desirable to stop PWM data transmission completely so as to enter a static power saving state. For minimal power consumption, the power saving state is preferably a static line state without static line-termination currents in order to achieve minimal static and dynamic power consumption.

However, switching to a static line state during PWM data transmission without special measures will typically cause the communication system to fail, because the system expects a next bit which does not arrive. Furthermore, the system may think a (non-existing) bit is completed by the time that the power-saving state is exited.

Proposed are methods for entering (starting) and exiting (stopping) PWM data transmission. Such methods enable a PWM data transmission system to make enter/exit a power saving state without causing data transmission errors or failure.

Furthermore methods are proposed to switch after the End of Transmission of payload data, to control mode while continuing PWM signalling for low level state and configuration communication.

According to an aspect of the invention there is provided a method of starting pulse width modulation, PWM, data transmission via a data link from a stopped state in which the data link is held at a first of two polarities, the method comprising; changing the polarity of the data link from the first polarity to the second polarity so as to create a first transition in the data link indicating the start of a preparation period; changing the polarity of the data link so as to create a signalling transition in the data link indicating the end of the preparation period and the start of a PWM data transmission mode in which PWM data transmission is undertaken.

Embodiments therefore provide a preparation or wake-up period which can be used to adapt circuit biasing levels between transmission and power-saving state. The duration of this wake-up period can be configurable depending on circuit requirements and/or timing constraints.

Also, a signalling transition in the data link may be used to accurately indicate the start of PWM data transmission.

According to another aspect of the invention there is provided a method of stopping pulse width modulation, PWM, data transmission via a data link, the method comprising; detecting a sequence of PWM data bits indicating an end of PWM data transmission; and stopping PWM data transmission by causing the data link to enter a state in which PWM, data transmission is stopped.

Thus, embodiments enable a PWM data transmission system to correctly enter a power-saving state.

The data coding scheme may be 8b10b coding, and the sequence of PWM data bits may comprise an end-of-transmission code word, such as K28.3 or K28.4. In this way, the last bit of the sequence can be chosen to be either'0' or '1' independent of the communication history.

The sequence of PWM data bits may comprise a run-length violating sequence of equal bits preceded and/or followed by one of more oppositely valued bits. In the case of a preceding opposite valued bit, the starting moment of the exit condition is well-determined. However, in order to switch state at a precisely determined moment in time, the total length is preferably known. This holds especially if the following state is a power saving state without transitions in the signal.

By causing the run-length violation to occur first, the oppositely valued bit may be used as an event indicator/trigger for accurate timing of a state change. Here, the exact length of the run-length violating sequence is not critical for the precise moment of state change. Therefore the length of the run-length violation sequence may be extended to temporarily continue to provide a clock signal to the far-end for example.

Although the exit condition has been described as a run-length violating sequence preceded and/or followed by an opposite polarity bit, the opposite polarity bit may be preceded and/or followed by codes, respectively, that indicate specific information about following states.

Instead of switching to a power-saving state at End-of-Transmission of payload data, the described encoded payload data transmission exit methods can also be used to switch from payload transmission to another mode of communication, for example for state and configuration control.

The run-length violation may occur with two different bit values, which can be utilized for different purposes. A particular interesting embodiment is to utilize one of these two cases to enter power-saving state and the other to switch to another communication state.

Similarly two special codes may be used to indicate two different exit cases. For 8b10b, if two codes are selected with opposite last bit values for the same running disparity, both the desired exit state and the polarity of the last bit can be controlled simultaneously. The desired exit state is then a combination of the used code and the running disparity.

According to another aspect of the invention, there is provided apparatus for starting pulse width modulation, PWM, data transmission via a data link from a stopped state in which the data link is held at a first of two polarities, the apparatus comprising; a controller adapted to change the polarity of the data link from the first polarity to the second polarity so as to create a first transition in the data link indicating the start of a preparation period, and to change the polarity of the data link so as to create a signalling transition in the data link indicating the end of the preparation period and the start of a PWM data transmission mode in which PWM data transmission is undertaken.

According to yet another aspect of the invention, there is provided apparatus for stopping pulse width modulation, PWM, data transmission via a data link, the apparatus comprising; a detection unit adapted to detecting a sequence of PWM data bits indicating an end of PWM data transmission; and a controller adapted to stop PWM data transmission by causing the data link to enter a state in which PWM data transmission is stopped.

Examples of the invention will now be described with reference to the accompanying drawings, in which:
Figure 1 illustrates the variation of polarity of a data line/link over time when starting PWM data transmission according to an embodiment of the invention;
Figure 2 illustrates the alternative polarity variation of the embodiment of Figure 1;
Figure 3 shows the use of a special code word or bit sequence to indicate the end of data transmission (EoT) according to an embodiment of the invention;
Figure 4 shows the use of two special code words or bit sequences to indicate the EoT according to an embodiment of the invention;
Figures 5a and 5b shows the use of a sequence of PWM data bits to indicate the EoT according to an embodiment of the invention wherein the sequence comprises a run-length violating sequence of equal bits preceded or followed by one of more oppositely valued bits, respectively.
Figures 6a and 6b show a variation of the embodiments of Figures 5a and 5b, respectively, wherein switching from payload transmission to another mode of communication is undertaken; and
Figure 7 shows the use of two special code words to indicate exit conditions according to an embodiment of the invention, wherein the last bit of the EoT is controlled to be '0' or '1' independent of data history.

The drawings are not to scale, and some dimensions may have been exaggerated (for example the thickness dimension) to make the drawings show the different components more clearly.

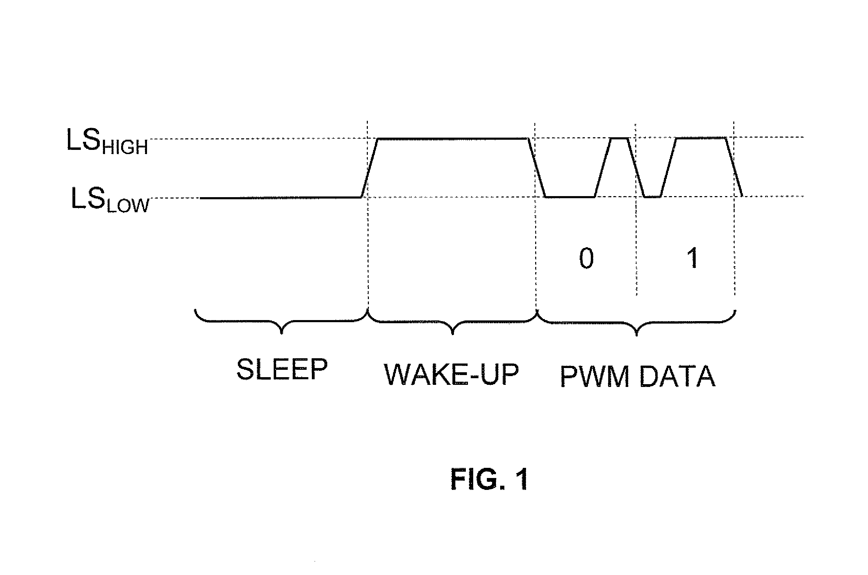

Referring to Figure 1, exiting a power-saving state, wherein the transmission line is in a static "low" line state (LS_{LOW}), can be achieved by exploiting a first line polarity transition TS₁ after the power-saving state. By arranging the line state during the power-saving (which in Figure 1 is LS_{Low}) to be equal to the line state (LS) during the first-phase of a PWM bit, the period (illustrated as the "Wake-Up" period in Figure 1) after the first transition TS₁ when exiting power-saving state (with a "high" line state LS_{HIGH}) can be exploited to prepare for the transmission of PWM data. Such a preparation or wake-up period can, for example, be useful to adapt circuit biasing levels between transmission and power-saving state. The duration of this wake-up period can be made programmable or configurable.

The line state during the preparation period is fixed to be opposite to the line state during the first-phase of a PWM bit so that the wake-up period clearly bounded by two transition edges (TS₁ and TS₂). Thus, in the example of Figure 1 the line state during the preparation period is LS_{HIGH}, whereas the line state in the power-saving mode and the first-phase of a PWM bit is LS_{LOW}.

The second line polarity transition TS₂ from LS_{HIGH} to LS_{LOW} therefore initiates the first PWM data bit of the PWM data transmission period (illustrated as the "PWM-Bits" period in Figure 1).

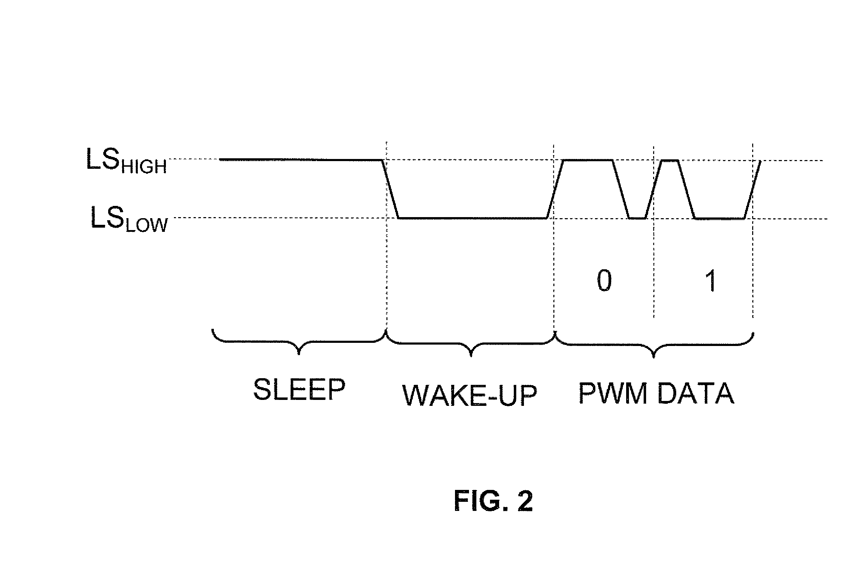

Referring now to Figure 2, it will be appreciated that opposite line state polarities to those described above (with relation to Figure 1) can be used. Thus, the line state in the power-saving mode and the first-phase of a PWM bit may be arranged to be high (i.e. LS_{HIGH}), whilst the line state during the preparation period is low (i.e. LS_{LOW}).

Also, the line state in the power-saving mode and the first-phase of a PWM bit need not be the same. In other words, power saving state and the first phase of PWM bit may have opposite polarity. For example, in an alternative embodiment, the line state in the power-saving mode may be arranged to be high (i.e. LS_{HIGH}), whilst the line state during first-phase of a PWM bit is low (i.e. LS_{LOW}). In this case, an additional transition is undertaken during the preparation period so as to ensure that the line state is in the correct polarity for a transition (at the end of the preparation period) to the polarity of the first-phase of a PWM bit which initiates the first PWM data bit of the PWM data transmission period. This additional edge enables the indication of a subevent during the preparation phase as it can placed at any position between the edge indicating the end of power-saving state and the edge that initiates the first PWM bit.

Having addressed how to exit a power saving mode to resume PWM data transmission, we now turn to the problem of correctly stopping or exiting PWM data transmission so as to enter a power-saving mode. In order to correctly enter into a power-saving state, the system should be made aware of this in advance. Here, it is assumed that the payload data during transmission is encoded with a limited run-length coding scheme (for example, 8b10b coded). Thus, although it is not necessary, it can be beneficial for crocking reasons to align all system events with the granularity of symbol boundaries (e.g 10 bit).

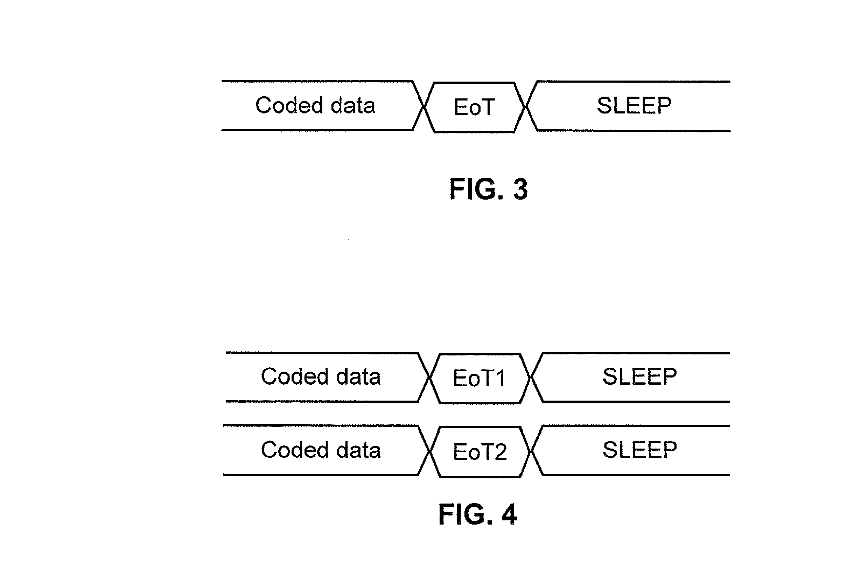

Referring to Figure 3, a first method according to an embodiment is illustrated. This embodiment uses a special code word or bit sequence to indicate the end of data transmission (EoT). By arranging a system to always enter a power-saving state (or "Sleep" mode) after the EoT is detected, the system can be simply arranged to monitor the data transmission in order to detect the special code word or bit sequence indicating the EoT.

If the system is not arranged to always go into the power-saving state after the end of transmission, but instead may go to another state, a plurality of EoT special code words or bit sequences may be used to indicate "what happens next". Alternatively, a separate follow-up sequence after one special code word may be used to identify further action. These follow-up sequences can be code words from a coding scheme but this is not necessary, as an EoT code word may already provide the trigger to exit a transmission mode.

Referring to Figure 4, in some instance the value of the last transmitted bit of the EoT will be known and fixed for a certain exit condition. However, this may not be the case if only one EoT code word is used to exit transmission. For example, in 8b10b coding, many code words have two occurrences depending on the communication protocol, which will also change the value of the last symbol bit based on previous payload content.

To address this issue, two end-of-transmission code words (EoT1 and EoT2) can be assigned which have oppositely valued last bits for the same conditions, such that the end-of-transmission code word(s) can always be made to end with the bit value of preference independently from the protocol. This way either the presence of absence of a bit value change at the end of the special symbol can be enforced. This method is also applicable for non-PWM signalled transmission like NRZ. For example, in case of 8b10b coding, the code words K28.3 and K28.4 are used for end-of-transmission so that the last bit can be chosen to be either '0' or '1' independent of the communication history. In that case a run-length violation is implicitly occurring when switching to a static line state, like for example power-saving state.

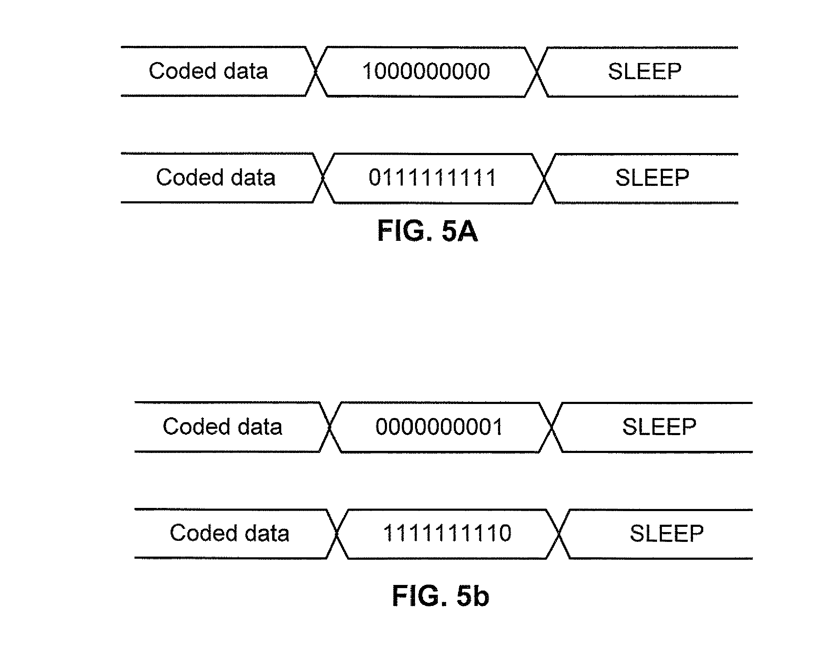

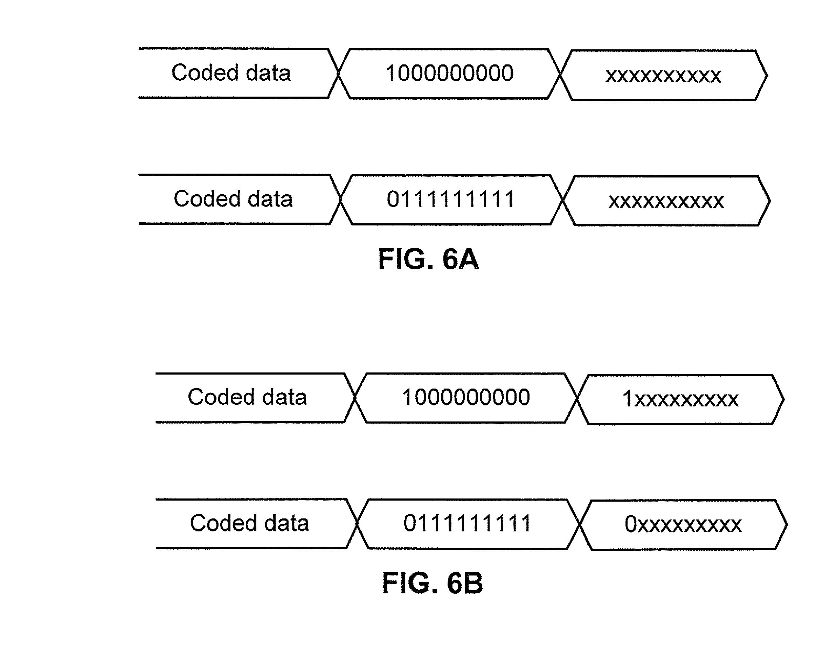

Referring now to Figures 5 and 6, a unique exception condition can be created with a run-length violation after a finial payload word. This eliminates the need to detect a special EoT code word or sequence. A special code word may still be applied to bound payload data in the burst for protocol usage, However this does not need to be known by the low-level interface state control. Nevertheless, it requires knowledge of after which bit (and edge) the transition to power-saving state needs to occur. Accordingly, a well defined and known sequence for the transition to power-saving state is preferred in such an embodiment. Alternative approaches to providing such a sequence will now be described with reference to Figures 5a and 5b and Figures 6a and 6b.

Referring now to Figure 5a, if the value of the last transmitted bit before the EoT is not known, a sequence of one bit followed by sufficient equal-valued bits with opposite value to the first bit to enforce a run-length violation is suitable to indicate a timed event independent of data transmission history. For example, with 10 bit granularity, 1000000000 (1x1+9x0) (see upper example of Figure 5a) and/or 0111111111 (1x0+9x1) (see lower example of Figure 5a) allows to transition to another state exactly after 9 equal valued bits. Both are complementary and can be exploited for different purposes. It should be appreciated that the use of 9 equal bits it not essential. It is just a easily comprehensible example for the case with 10 bit granularity in combination with 8b10b payload data encoding. Other suitable amounts of sequential equal bits may be used in other embodiments.

Alternatively, first the run-length violating sequence is transmitted followed by one opposite valued bit, as shown by the examples of Figure 5b. Although the example shows 9 equal bits followed by one opposite valued bit, the amount of equal bits is flexible as long as it ensures violation of the run-length of the applied coding scheme. The last opposite valued bit may be used as trigger for completion of the exit condition. The last opposite valued bit may be followed by a code of pre-defined length to indicate desired behaviour in subsequent states.

Turning to Figure 6, the run-length violation may occur before event indication, wherein the event is not a power-saving or sleep mode but is a non-data transmission mode. For example, for an 8b10b coding with 10 bit granularity the sequences 1000000000 (1x1+9x0) (see upper example of Figure 6a) and/or 0111111111 (1x0+9x1) (see lower example of Figure 6a) can be used. Also, as shown in Figure 6b, first a sequence of equal bits is transmitted to enforce a run length violation and after that one of more oppositely valued bits can be used to indicate the state change moment.

Again, it should be appreciated that the use of 9 equal bits it not essential. It is just a easily comprehensible example for the case with 10 bit granularity in combination with 8b10b payload data encoding. Other suitable amounts of sequential equal bits may be used in other embodiments.

The beginning and end of the run-length violating sequence are not required to be aligned with the granularity boundaries of the payload data (for example 10-bit granularity in case of 8b10b encoded payload data). However, for implementation purposes, it may be preferable in a system to keep it aligned to the data granularity. This can be achieved by choosing sequences which are multiples of the granularity and making the exit condition occur at a known position within the granularity. The figures 5 and 6 already included multiple examples of this. In figures 5a and 6a this is accomplished by the opposite-valued start bit as first bit, in figure 5b by the opposite-valued end bit just before end a 10-bit interval, while in figure 6b the opposite-valued end-bit is the first bit of sub-sequent information. Different possibilities can be utilized for different conditions.

In case of a run-length violation in combination with an opposite-valued bit, the exact starting moment of the run-length violation may not be known since the last payload data word may add some additional bits to this sequence. Although the exit condition is well-defined in this case (being run-length violation followed by an opposite-valued bit) it may be advantageous in a system to also have a defined starting moment of the run-length violating sequence. This can be achieved by applying both an opposite valued start and end bit. Alternatively, if the last bit of the payload can be controlled a transition at the end of the payload can be enforced.

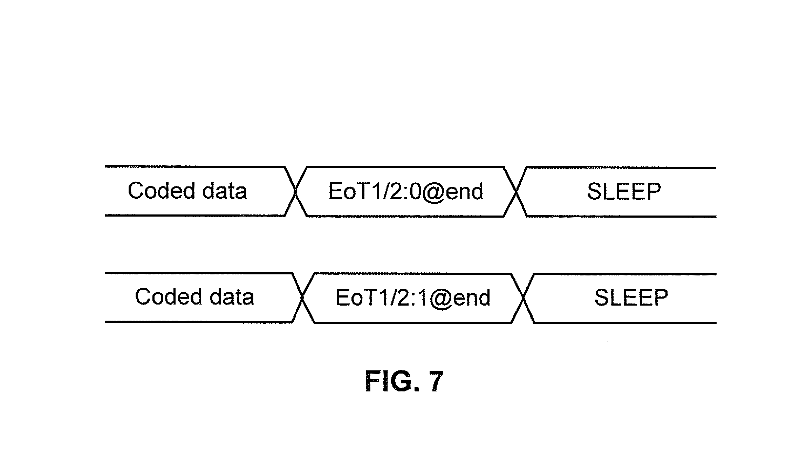

Figure 7 illustrate an embodiment wherein the EoT indication utilises one of two codes which have opposite valued last-bits for the same Running Disparity. Thus, for both possibilities of Running Disparity values before the EoT symbol, the EoT can be chosen so as to determine the last bit value of the EoT independent of the data symbol history.

It should be understood that embodiments of the invention can be applied for both single-ended and differential signalling schemes.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A method of starting pulse width modulation, PWM, data transmission via a data link from a stopped state in which the data link is held at a first of two polarities, the method comprising;
changing the polarity of the data link from the first polarity to the second polarity so as to create a first transition in the data link indicating the start of a preparation period;
changing the polarity of the data link so as to create a signalling transition in the data link indicating the end of the preparation period and the start of a PWM data transmission mode in which PWM data transmission is undertaken.

2. The method of claim 1, wherein, in PWM data transmission mode, the data link is at the first polarity for the first phase of a PWM data bit, and wherein the step of changing the polarity of the data link so as to create a signalling transition in the data link comprises changing the polarity of the data link from the second polarity to the first polarity.

3. The method of claim 1, wherein, in PWM data transmission mode, the data link is at the second polarity for the first phase of a PWM data bit, and further comprising the step of:
prior to changing the polarity of the data link so as to create a signalling transition, changing the polarity from the second polarity to the first polarity of the data link so as to create a preparatory transition in the data link.

4. A method of stopping pulse width modulation, PWM, data transmission via a data link, the method comprising;
detecting a sequence of PWM data bits indicating an end of PWM data transmission; and
stopping PWM data transmission by causing the data link to enter a state in which PWM data transmission is stopped.

5. The method of claim 4, wherein the predetermined sequence of PWM data bits comprises an end-of-transmission code word according to a predetermined data coding scheme.

6. The method of claim 5 wherein the data coding scheme is 8b10b coding, and wherein the end-of-transmission code word is either K28.3 or K28.4.

7. The method of claim 4, 5 or 6, wherein there is more than one state in which the data link is held at a first of two polarities, and wherein the state entered into by data link depends upon at least a portion of the detected sequence of PWM data bits.

8. The method of claim 4 wherein the sequence of PWM data bits is arranged to cause a run-length violation with respect to a run-length limited coding scheme for data transmitted via the data link,.

9. The method of claim 8, wherein the sequence of PWM data bits comprises a run-length violating sequence of equal bits preceded by one or more oppositely valued bits.

10. The method of claim 8 or 9, wherein the sequence of PWM data bits comprises a run-length violating sequence of equal bits followed by one or more oppositely valued bits.

11. The method of claim 8, 9 or 10, wherein the sequence of PWM bits is extended to provide a clock signal.

12. A computer program comprising computer program code means adapted to perform all of the steps of any of claims 1 to 11 when said program is run on a computer.

13. A computer program as claimed in claim 12 embodied on a computer readable medium.

14. Apparatus for starting pulse width modulation, PWM, data transmission via a data link from a stopped state in which the data link is held at a first of two polarities, the apparatus comprising;
a controller adapted to change the polarity of the data link from the first polarity to the second polarity so as to create a first transition in the data link indicating the start of a preparation period, and to change the polarity of the data link so as to create a signalling transition in the data link indicating the end of the preparation period and the start of a PWM data transmission mode in which PWM data transmission is undertaken.

15. Apparatus for stopping pulse width modulation, PWM, data transmission via a data link, the apparatus comprising;
a detection unit adapted to detecting a sequence of PWM data bits indicating an end of PWM data transmission; and
a controller adapted to stop PWM data transmission by causing the data link to enter a state in which PWM data transmission is stopped.
